# EUROPEAN PATENT APPLICATION

(11) **EP 3 321 868 A1**
(43) Date of publication of application: **16.05.2018**
(21) Application number: 17200159.6
(22) Date of filing: 06.11.2017
(51) Int. Cl.: G06Q 10/08, G06Q 10/00

(54) **LEFT-OVER PAINT BROKERING DEVICE, METHOD AND PROGRAMME**

(30) Priority: 09.11.2016 JP 2016218596
(71) Applicant: Genbe Co., Ltd., Maizuru-shi, Kyoto 624-0907 (JP)
(72) Inventor: SASAKI, Kenichi, Kyoto, Kyoto 624-0907 (JP)
(74) Representative: Epping - Hermann - Fischer

(57) **Abstract**

A recycled paint manufacturing support device 1 that includes a used paint DB 132 that stores paint information containing painting contractor identification information, color number information, and inventory amount information, an identifier 114 that identifies based on a color number and an amount of ordered recycled paint, (i) a color number of raw material paint that is usable as a raw material of the recycled paint, the color number corresponding to a color that is lighter than the color number of the recycled paint and (ii) a blending amount of each primary color to be included in the raw material paint, and a selector 115 that refers to the used paint DB 132 and selects, based on the color number of the raw material paint and the blending amount of each primary color to be included in the raw material paint that are identified by the identifier 114, a paint holder to be a supplier from which the raw material paint is to be procured.

## Description

This application relates to a recycled paint manufacturing support device, a recycled paint manufacturing support method, and a program.

Tradesmen who paint products of manufacture prepare paint needed for painting the products of manufacture based on a production plan for the products of manufacture. When doing so, the tradesmen typically prepare more paint than is necessary in order to prevent delays in painting work from occurring otherwise caused by not having enough paint. Thus, when the product production plan for a product of manufacture is complete, often there is unused paint (leftover paint). To address this, a paint reuse system for improving effective utilization of leftover paint by collecting this leftover paint to manufacture a recycled paint product (hereinafter referred to as "recycled paint") is proposed in (see Unexamined Japanese Patent Application Kokai Publication No. 2004-334250, for example). This reuse system acquires information containing the type (color) of recycled paint and/or the blending amount of each primary color paint to be included in the recycled paint and information containing the type of leftover paint and the blending amount of each primary color paint included in the leftover paint. Then, the reuse system determines, based on this acquired information, manufacturing conditions including a type and amount of primary color paint to be blended into leftover paint for manufacturing the recycled paint and presents the manufacturing conditions to a user.

By the way, the paint usable for manufacturing the recycled paint is restricted by the type of recycled paint and the blending amount of each primary color paint to be included in the recycled paint. Therefore, a user who utilizes the reuse system described in Unexamined Japanese Patent Application Kokai Publication No. 2004-334250 needs to search for a supplier in possession of paint that can be used as a raw material of the recycled paint whenever, for example, they do not have the raw material for the recycled paint that the user seeks to manufacture. Thus, delivery date delays can occur depending on the type of recycled paint ordered.

A recycled paint manufacturing support device (1) according to the present disclosure includes:
a paint storage (132) that stores paint information containing inventory holder identification information for identifying a paint holder among paint holders, color characteristic value information indicating a color characteristic value of paint in possession by the paint holder, and inventory amount information indicating an inventory amount of the paint;
an identifier (114) that identifies, based on a color characteristic value and an amount of ordered recycled paint, (i) a color characteristic value of raw material paint that is usable as a raw material of the ordered recycled paint, the color characteristic value of the raw material paint being different than the color characteristic value of the recycled paint and (ii) a blending amount of each primary color to be included in the raw material paint; and
a selector (115) that refers to the paint storage (132) and selects, based on the color characteristic value of the raw material paint and the blending amount of each primary color to be included in the raw material paint that are identified by the identifier, a supplier paint holder, from among the paint holders, as a supplier from which the raw material paint is to be procured.

A more complete understanding of this application can be obtained when the following detailed description is considered in conjunction with the following drawings, in which:
FIG. 1 is a schematic diagram illustrating a system that includes a recycled paint manufacturing support device according to an embodiment of the present disclosure;
FIG. 2 is a sequence diagram illustrating operations of the system that includes the recycle paint manufacturing support device according to the embodiment;
FIG. 3 is a diagram illustrating an example of a display screen of a terminal device of a painting contractor according to the embodiment;
FIG. 4 is a block diagram illustrating configuration of the recycled paint manufacturing support device according to the embodiment;
FIG. 5 is a diagram illustrating content in a used paint database according to the embodiment;
FIG. 6A is a diagram illustrating content in a blending percentage database according to the embodiment;
FIG. 6B is a diagram illustrating content in an order paint database according to the embodiment;
FIG. 7 is a diagram illustrating content in an evaluation database according to the embodiment;
FIG. 8 is a flowchart illustrating recycled paint manufacturing support processing executed by the recycled paint manufacturing support device according to the embodiment;
FIG. 9 is a flowchart illustrating recycled paint manufacturing support processing executed by the recycled paint manufacturing support device according to the embodiment; and
FIG. 10 is a flowchart illustrating recycled paint manufacturing support processing executed by the recycled paint manufacturing support device according to a modified embodiment.

A recycled paint manufacturing support device according to an embodiment of the present disclosure is described below in detail with reference to the drawings.

The recycled paint manufacturing support device according to the present disclosure retains color number information indicating a color number (color characteristic value) of paint (used paint) in possession by a painting contractor, and inventory amount information indicating an inventory amount. Upon receipt of an order from an order-placing agent for recycled paint, the recycled paint manufacturing support device identifies the color number of raw material paint that are necessary for manufacturing the recycled paint and the blending amount of each primary color paint included in the raw material paint. Then, the recycled paint manufacturing support device selects a painting contractor in possession of paint that includes the identified color number and the blending amount of each primary color paint to be included in the raw material paint, and transmits paint order information for ordering the paint to the terminal device belonging to the painting contractor.

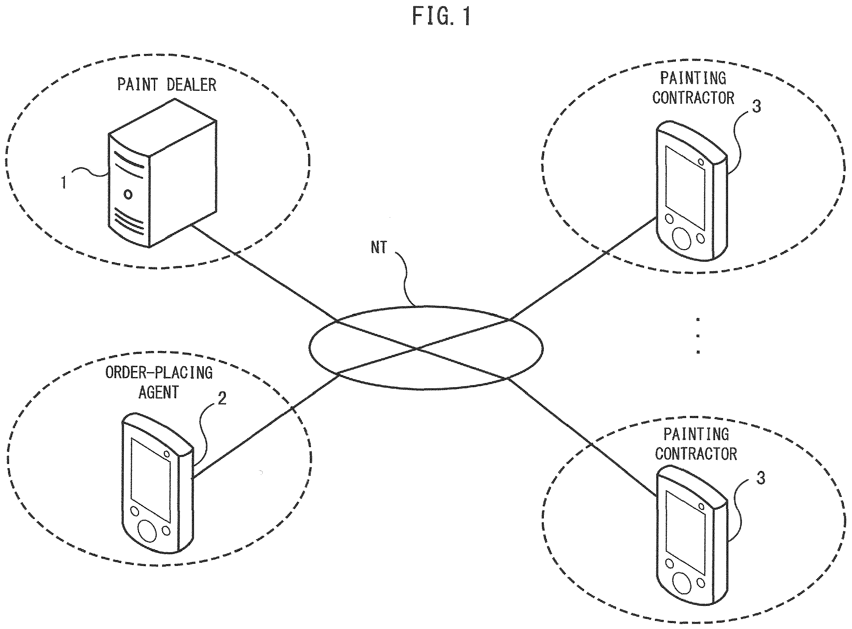

As illustrated in FIG. 1, a recycled paint manufacturing support device 1 belongs to a paint dealer for example. The recycled paint manufacturing support device 1 is connected, via a network NT including a local area network (LAN) and the Internet, to a terminal device 2 belonging to an order-placing agent and terminal devices 3 belonging to multiple painting contractors.

The recycled paint manufacturing support device 1 includes, for example, a general-purpose personal computer provided with communication functionality and the device includes a central processing unit (CPU), a random access memory (RAM), a read-only memory (ROM), a storage, an inputter, a display, and a communication interface. The RAM includes a volatile memory and is used as a working region of the CPU. The ROM and the storage include non-volatile memory such as a magnetic disk and semiconductor memory, and the ROM and the storage store a program for performing various functions of the recycled paint manufacturing support device 1. The CPU loads this program from the ROM or storage into the RAM and then executes the application program to perform the various functions of the recycled paint manufacturing support device 1. The inputter includes a keyboard for example and the inputter accepts various operation information input by a user and outputs the accepted operation information to the CPU. The display includes a liquid crystal display for example and the display displays the various information inputted to the CPU.

The terminal device 2 is a smartphone for example, and the terminal device 2 is provided with a CPU, a RAM, a ROM, a storage, an inputter, a display, and a communication interface. The ROM or the storage of the terminal device 2 stores an application program for transmitting to the recycled paint manufacturing support device 1 information for ordering paint (hereinafter referred to as "paint order information"). Also, the CPU loads this application program from the ROM or the storage into the RAM and then executes the application program to perform the function of transmitting the paint order information to the recycled paint manufacturing support device 1. The inputter includes a touch panel for example whereas the display includes a liquid crystal display for example.

The terminal device 3, like the terminal device 2, also is a smartphone for example, and the terminal device 3 includes a CPU, a RAM, a ROM, a storage, an inputter, a display, a communication interface, and a camera. The ROM or the storage of the terminal device 3 stores an application program for transmitting to the recycled paint manufacturing support device 1 information regarding paint in possession by a painting contractor (hereinafter referred to as "inventory paint information"). Also, the CPU loads this application program from the ROM or the storage into the RAM and then executes the application program to perform the function of transmitting to the recycled paint manufacturing support device 1 the inventory paint information.

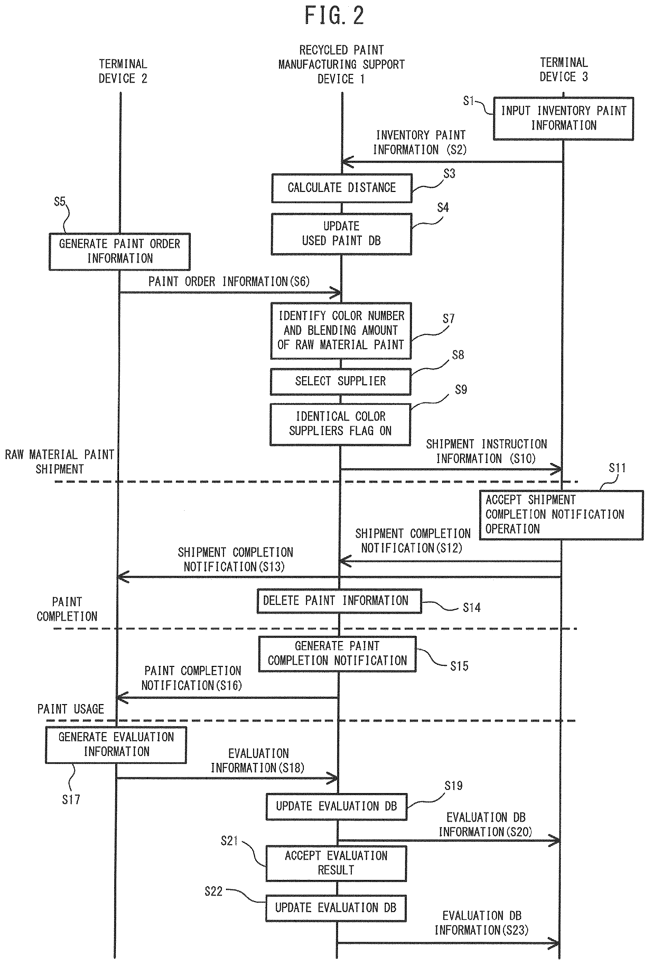

Next, the operation of the system that includes the recycled paint manufacturing support device 1 and the terminal devices 2 and 3 is described with reference to FIG. 2. First, when a painting contractor inputs information regarding paint in his/her own possession (inventory paint information) (step S1), the inventory paint information is transmitted from the terminal device 3 to the recycled paint manufacturing support device 1 (step S2).

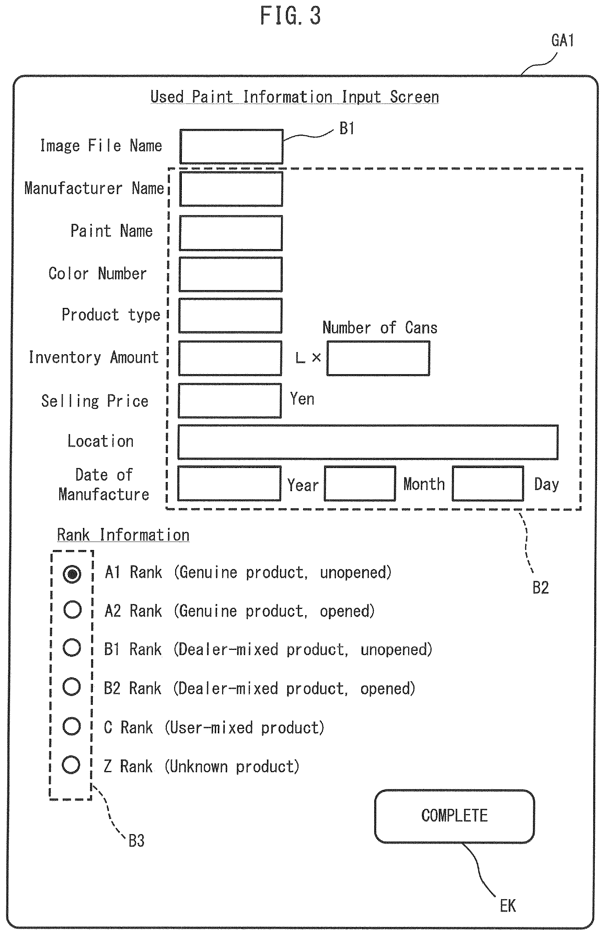

Here, the terminal device 3, in response to the user who is a painting contractor, displays paint information input screen GA1, for example, as illustrated in FIG. 3, on the display. The paint information input screen GA1 includes image file name input field B1 for inputting an image file name of a photo image indicating paint, input field B2 for inputting the manufacturer name of the paint in possession, the paint name, the color number, the product type, the inventory amount, the selling price, the location of the painting contractor, and the date of manufacture of the paint, and checkbox B3 for specifying the rank of the paint. When the user touches "Complete button EK" after completion of input into input fields B1 and B2 and checkbox B3, the input inventory paint information is transmitted to the recycled paint manufacturing support device 1. The inventory paint information contains painting contractor identification information (paint holder identification information) for identifying the painting contractor (paint holder) in possession of the paint, color number information (color characteristic value information) indicating the color number (color characteristic value) of the paint in possession by the painting contractor, and inventory amount information indicating the inventory amount. The inventory paint information also contains the paint name, the manufacturer name, the selling price, and the date of manufacture of the paint in possession by the painting contractor. Further, the inventory paint information contains paint location information indicating the location of the paint, an image file indicating the captured image of the paint, and rank information indicating the rank of the paint. Here, the term "paint location" refers to the location of the warehouse where paint is stored, for example.

When the recycled paint manufacturing support device 1 belonging to the paint dealer receives the inventory paint information, the recycled paint manufacturing support device 1 extracts the address information of the painting contractor from the inventory paint information and calculates the distance between the location of the paint dealer and the location of the painting contractor by referring to map information stored in the storage (step S3). Here, the location of the paint dealer, for example, is set to the place where a color-mixing facility belonging to the paint dealer is located.

Next, the recycled paint manufacturing support device 1 updates a used paint database (hereinafter referred to as "DB") in the recycled paint manufacturing support device 1 in which information is stored regarding paint (used paint) in possession by each contractor, by adding to the used paint DB, paint information containing the painting contractor identification information, the color number information, the inventory amount information, and the like that are extracted from the inventory paint information, as well as distance information indicating the distance between the location of the color-mixing facility belonging to the paint dealer and the location of the paint (step S4).

Also, the order-placing agent is assumed to launch the application program in the terminal device 2 carried by the order-placing agent, input information regarding recycled paint to be ordered into the terminal device 3, and perform operations to generate paint order information by utilizing this information. Then, terminal device 2 generates paint order information by utilizing the information inputted by the painting contractor regarding paint to be ordered (step S5). Here, the terminal device 2, in response to the user who is the order-placing agent, displays on the display an order screen including an input field for inputting the paint name, product type, a necessary amount (volume of can and number of cans necessary) of the recycled paint to be ordered, as well as the color number and delivery due date. The input field of the color number may be substituted with a field for inputting a color name if the recycled paint to be ordered by the order-placing agent is for rust preventative applications. The paint order information contains order-placing agent identification information for identifying the order-placing agent, order-placing agent location information indicating the location of the order-placing agent, color number information indicating the color number of the paint to be ordered, and order amount information indicating the amount of the paint to be ordered.

Afterwards, the paint order information is transmitted from the terminal device 2 to the recycled paint manufacturing support device 1 (step S6).

Upon receipt of the paint order information, the recycled paint manufacturing support device 1 specifies the color number of the raw material paint and the blending amount of each primary color paint included in the raw material paint that is usable as raw material of the ordered recycled paint, based on the color number and the amount of the ordered recycled paint (step S7). Here, the recycled paint manufacturing support device 1 identifies a blending percentage of each primary color paint that should be included in the recycled paint based on the color number of the recycled paint, and then identifies the blending amount of each primary color paint that should be included in the recycled paint based on the amount of the ordered recycled paint. Then, the recycled paint manufacturing support device 1 identifies a color number of the raw material paint and the blending amount of each primary color paint included in the raw material paint usable as raw material of the recycled paint, based on the blending amount of each primary color paint to be included in the identified recycled paint. Specifically, the recycled paint manufacturing support device 1 identifies a color number that corresponds to a color lighter than the color corresponding to the color number of the ordered recycled paint. Then, the recycled paint manufacturing support device 1 specifies the blending amount of each primary color paint included in the raw material paint such that the sum total of the amount of raw material paint of the identified color number and the amount of the primary color paint that should be added to the raw material paint is equal to the recycled paint order amount.

Next, the recycled paint manufacturing support device 1 selects a supplier of the raw material paint based on the color number of the raw material paint and the blending amount of each primary color paint included in the raw material paint that are usable as raw material of the identified recycled paint (step S8). Here, the recycled paint manufacturing support device 1 refers to the used paint DB on the recycled paint manufacturing support device 1 to extract any painting contractors in possession of the paint that matches with the color number of the identified raw material paint. Then, the recycled paint manufacturing support device 1 selects, from among the extracted painting contractors, a painting contractor to be the supplier so that the total of the blending amount of each primary color paint included in the paint in possession by the selected contractor is greater than or equal to the blending amount of each primary color paint to be included in the identified raw material paint. Here, when raw material paint in possession by a single painting contractor is not enough to cover the order amount of the recycled paint, the recycled paint manufacturing support device 1 may also select additional painting contractors. That is, there are cases in which the recycled paint manufacturing support device 1 selects multiple painting contractors as suppliers of the raw material paint. Also, the recycled paint manufacturing support device 1 preferentially selects, from the extracted painting contractors painting contractors, a painting contractor that is located in a place that is near the location of the color-mixing facility in possession by the paint dealer.

Then, multiple painting contractors are assumed to have been selected by the recycled paint manufacturing support device 1 as suppliers for the raw material paint having an identical color number. In such as case, the recycled paint manufacturing support device 1 sets an identical color suppliers flag to ON in the order paint DB on the recycled paint manufacturing support device 1, for storing information regarding paint that is supplied to the order destination (step S9). In doing so, the raw material of the identical color to be used in the paint that is supplied to the order-placing agent is registered as having been procured from multiple painting contractors.

Then, shipment instruction information instructing the painting contractor selected as the supplier to deliver the paint is transmitted from the recycled paint manufacturing support device 1 to the terminal device 3 of the painting contractor selected as the supplier (step S10).

Afterwards, the painting contractor ships the paint in his/her possession to the paint dealer, and then it is assumed that the user who is the painting contractor has performed an operation for notifying, the painting contractor and the paint dealer, via the terminal device 3, that the shipment has been completed (hereinafter referred to as "shipment completion notification operation"). Upon acceptance of the shipment completion notification operation by the terminal device 3 (step S11), the shipment completion notification is transmitted from the terminal device 3 to the recycled paint manufacturing support device 1 (step S12) and also to the terminal device 2 carried by the order-placing agent (step S13). Then, upon receipt of the shipment completion notification from the terminal device 3, the recycled paint manufacturing support device 1 deletes, from its own used paint DB in which information regarding paint in possession by each painting contractor is stored, the paint information regarding paint corresponding to the shipment completion notification (step S14). In doing so, the shipped paint is removed from the candidates of raw material paints usable by the recycled paint manufacturing support device 1 for manufacturing the recycled paint.

Afterwards, it is assumed that the paint dealer completes manufacturing of the ordered recycled paint and then the user who is the paint dealer performs an operation notifying the recycled paint manufacturing support device 1 that paint has been completed (hereinafter referred to as "completion notification operation"). Here, the paint dealer inputs into the recycled paint manufacturing support device 1 comparison image information indicating an image (hereinafter referred to as "comparison image") obtained by taking a side-by-side picture of a sample created using the completed paint (hereinafter referred to as "painted sample") and a color sample prepared beforehand. Then, the recycled paint manufacturing support device 1 generates a paint completion notification giving notification that the recycled paint has been completed (step S15). Afterwards, the paint completion notification is transmitted from the recycled paint manufacturing support device 1 to the terminal device 2 carried by the order-placing agent (step S16). This paint completion notification contains the paint name information assigned to the recycled paint, the product number information of the raw material paint used for manufacturing the recycled paint, the information indicating the manufacturer name, the selling price, and the date of manufacture, rank information, flag information indicating the details regarding the identical color suppliers flag, and the previously-described comparison image information. In doing so, the order-placing agent is able to know the characteristics of the raw material paint used for manufacturing the recycled paint. Also, by referring to the comparison image indicating the comparison image information, the order-placing agent can view the physical appearance of the ordered recycled paint.

Also, after the order-placing agent receives the ordered paint from the paint dealer and uses the paint, the user who is the order-placing agent assumedly inputs into the terminal device 2 information indicating the evaluation with respect to the ordered paint, and uses this information to perform an operation to generate evaluation information. At this time, the terminal device 3 uses the information inputted by the order-placing agent to generate evaluation information (step S17). Next, the evaluation information is transmitted from the terminal device 3 to the recycled paint manufacturing support device 1 (step S18). This evaluation information contains information indicating the evaluation by the order-placing agent with respect to the recycled paint sold by the paint dealer.

Upon receipt of the evaluation information, the recycled paint manufacturing support device 1 updates the evaluation DB on the recycled paint manufacturing support device 1, the evaluation DB being for storing the evaluation result with respect to the raw material paint (step S19). Here, the recycled paint manufacturing support device 1 updates the evaluation DB by adding to the evaluation DB the evaluation result indicated by the received evaluation information. Next, evaluation DB information indicating the details registered in the evaluation DB is transmitted from the recycled paint manufacturing support device 1 to the terminal device 3 carried by the painting contractor (step S20).

Also, the paint dealer assumedly operates the recycled paint manufacturing support device 1 to register in the evaluation DB the evaluation regarding the raw material paint procured from the painting contractor. In such a case, the recycled paint manufacturing support device 1 accepts the evaluation result by the paint dealer (step S21), and updates the evaluation DB on the recycled paint manufacturing support device 1 (step S22). Here, the recycled paint manufacturing support device 1 updates the evaluation DB by adding to the evaluation DB the accepted evaluation result. Next, the evaluation DB information indicating the details registered in the evaluation DB is transmitted from the recycled paint manufacturing support device 1 to the terminal device 3 carried by the painting contractor (step S23). In this manner, the public disclosing of the evaluation result by the order-placing agent or the paint dealer for paint used as the raw material paint, urges painting contractors to assume responsibility regarding the quality of leftover paint that is managed by the painting contractors. This is advantageous in that there is an incentive to maintain a high level of quality for raw material paint.

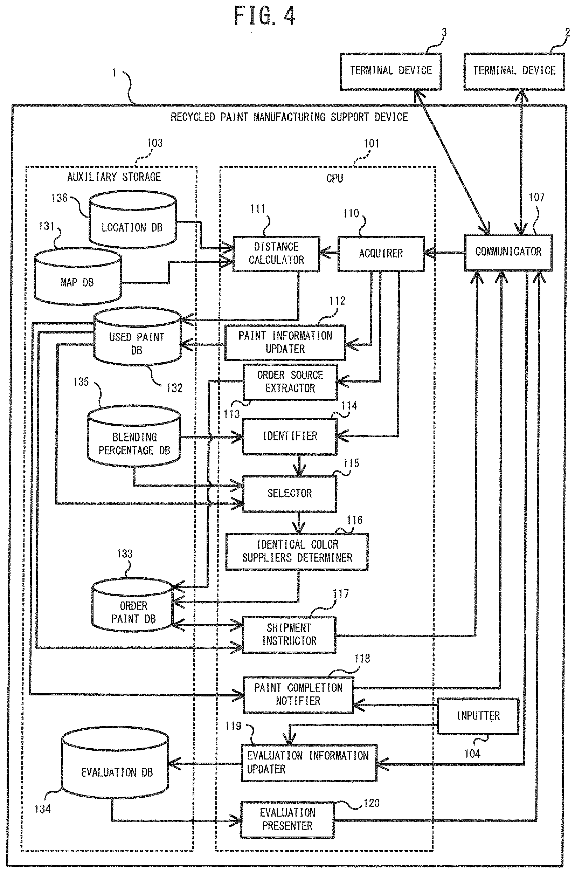

Next, the function configuration of the recycled paint manufacturing support device 1 according to the present embodiment is described. As illustrated in FIG. 4, a CPU 101 functions as an acquirer 110, a distance calculator 111, a paint information updater 112, an order source extractor 113, an identifier 114, a selector 115, an identical color suppliers determiner 116, a shipment instructor 117, a paint completion notifier 118, an evaluation information updater 119, and an evaluation presenter 120, by loading a program, which is stored in an auxiliary storage 103, into a primary storage (not illustrated) and then executing the program. Also, the auxiliary storage 103 contains a map DB 131, a location DB 136, a used paint DB (paint storage) 132, a blending percentage DB 135, an order paint DB 133, and an evaluation DB 134.

The map DB (map information storage) 131 stores map information. The map information contains information regarding distances between locations corresponding to multiple positions on a map. The location DB (location storage) 136 stores information (facility location information) indicating the locations of color-mixing facilities (paint manufacturing facilities) belonging to paint dealers.

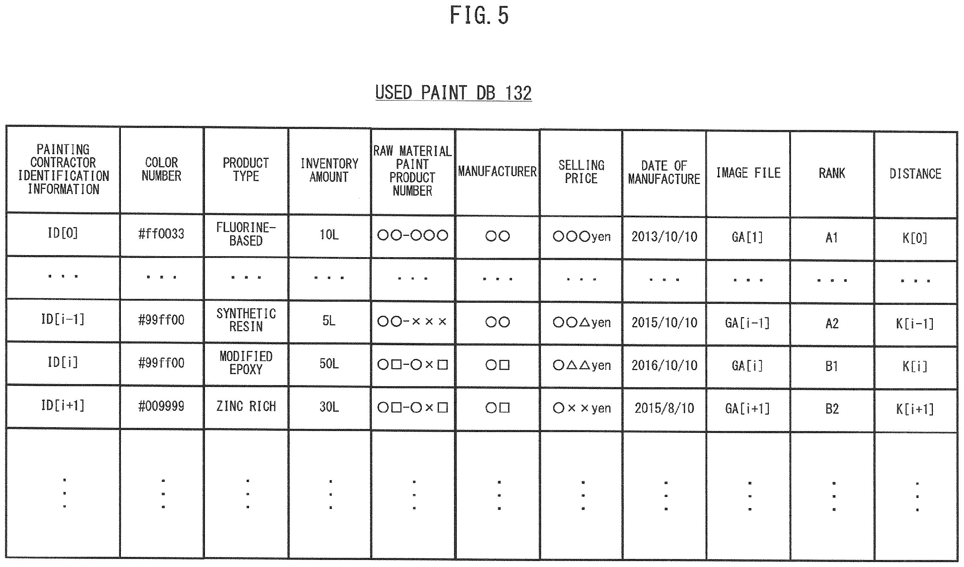

The used paint DB 132, for example, as illustrated in FIG. 5, stores paint information including painting contractor identification information (inventory holder identification information) for identifying a painting contractor (paint holder), color number information (color characteristic value information) indicating the color number (color characteristic value) of paint in possession by the painting contractor, product type information indicating the product type of paint in possession by the painting contractor, and inventory amount information indicating the inventory amount of paint. The color number is, for example, a hexadecimal color code. The paint information also contains information indicating a raw material paint product number, which is assigned to the paint, and indicating a manufacturer name, a selling price, and a date of manufacture of the paint, an image file indicating the captured image of the paint, and paint rank information. The paint information also contains distance information indicating the distance between the location of a color-mixing facility and the location of the paint in possession by the painting contractor.

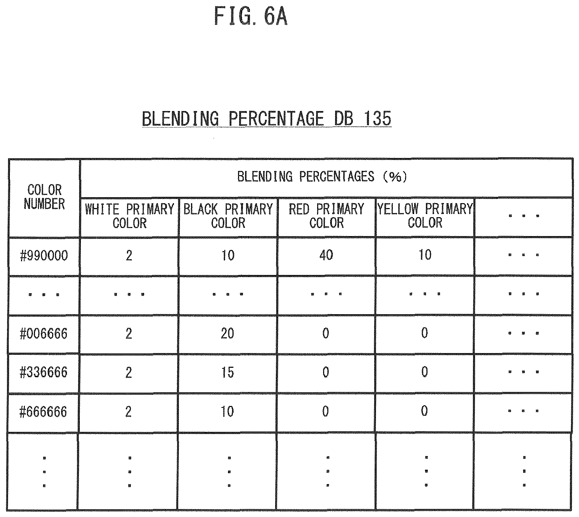

The blending percentage DB 135, for example as illustrated in FIG. 6A, associatively stores a color number together with a blending percentage of each primary color paint that should be included in the paint corresponding to the color number.

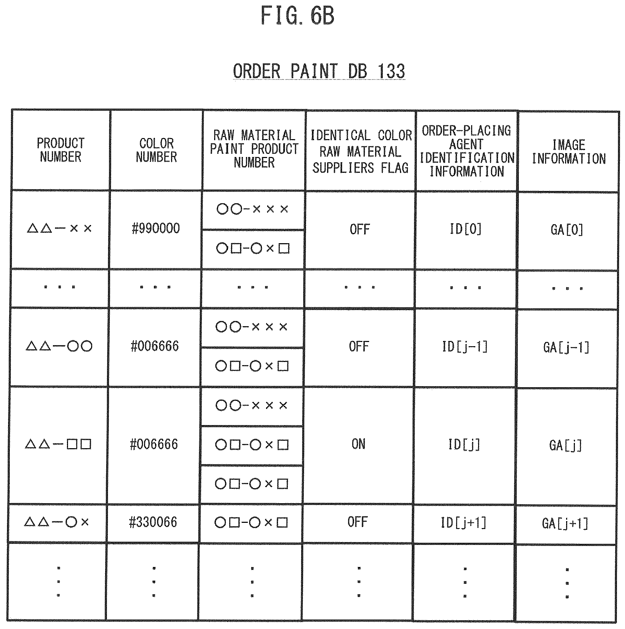

The order paint DB 133, for example as illustrated in FIG. 6B, for each recycled paint ordered by an order-placing agent, associatively stores a color number, a product number of the raw material paint used (raw material paint product number), order-placing agent identification information, and image information indicating a comparison image, with the product number information assigned to the recycled paint ordered by the order-placing agent.

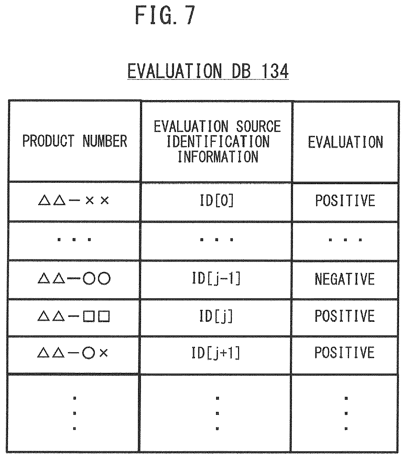

The evaluation DB 134, for example, as illustrated in FIG. 7, for each paint ordered by an order-placing agent, associatively stores identification information of an order-placing agent who evaluated paint and information indicating an evaluation result, with the product number information assigned to the paint supplied to the order-placing agent.

Referring back to FIG. 4, the acquirer 110 acquires, via a communicator 107, inventory paint information transmitted from the terminal device 3 carried by the painting contractor. The acquirer 110 also acquires, via the communicator 107, paint order information transmitted from the terminal device 2 carried by the order-placing agent.

When the acquirer 110 acquires the inventory paint information from the terminal device 3 carried by the painting contractor, the distance calculator 111 extracts the location of the paint from the acquired inventory paint information and acquires from the location DB 136 the information indicating the location of the color-mixing facility belonging to the paint dealer. Further, the distance calculator 111 refers to the map information stored in the map DB 131 and calculates the distance between the location of the color-mixing facility and the location of the paint. The distance calculator 111 notifies the paint information updater 112 regarding the distance information indicating the calculated distance.

The paint information updater 112 updates the used paint DB 132 by adding the painting contractor identification information, the color number information, the inventory amount information, and the like that are extracted from the inventory paint information acquired by the acquirer 110, the image file, and the rank information. Further, the paint information updater 112, uses the distance information, which is received as a notification from the distance calculator 111, indicating the distance calculated by the distance calculator 111, to update the distance information stored in the used paint DB 132.

The order source extractor 113 extracts order source identification information, for identifying the order source, from the paint order information acquired by the acquirer 110, and stores the extracted order source identification information into the order paint DB 133. This order source identification information contains, for example, information indicating the email addresses and locations managed by the purchasing department, and the like, of the order-placing agent that is the order source.

The identifier 114 identifies the color number of the raw material paint and the blending amount of each primary color paint that should be included in the recycled paint that are usable as raw material of the ordered recycled paint, based on the color number and the amount of ordered recycled paint. The identifier 114 refers to the blending percentage DB 135 and identifies, based on the color number of the ordered recycled paint, the blending percentage of each primary color paint that should be included in the recycled paint, and then identifies, based on the identified blending percentages and the amount of the ordered recycled paint, the blending amount of each primary color paint to be included in the recycled paint. Further, the identifier 114 identifies the color number of the raw material paint and the blending amount of each primary color paint to be included in the raw material paint that are usable as raw material of the recycled paint, based on the blending amount of each primary color paint to be included in the identified recycled paint. Here, the identifier 114 identifies a color number that corresponds to a color lighter than the color corresponding to the color number of the ordered recycled paint. Then, the identifier 114 identifies a blending amount of each primary color paint to be included in the raw material paint such that the sum total of the amount of raw material paint of the identified color number and the amount of the primary color paint that should be added to the raw material paint is equal to the recycled paint order amount.

The selector 115 refers to the used paint DB 132 and selects, based on the color characteristic value of the raw material paint and the blending amount of each primary color paint to be included in the raw material paint that are identified by the identifier 114, the painting contractor identification information of the painting contractor to be the supplier from which the raw material paint is to be procured. The selector 115 extracts from the raw material paint identification information stored in the used paint DB 132, raw material paint identification information assigned to paint in which the blending amount of each primary color paint is equal to the blending amount of each primary color paint included the raw material paint identified by the identifier 114. Further, the selector 115 selects from the painting contractor identification information corresponding to the extracted raw material paint identification information the painting contractor identification information of the painting contractor to be the supplier from which the raw material paint is procured.

Also, the selector 115, with reference to the distance information stored in the used paint DB 132, selects, from the painting contractor identification information of the painting contractor in possession of the raw material paint that is usable as raw material of the ordered recycled paint, the painting contractor identification information of the painting contractor in possession of paint that is nearest to the location of the color-mixing facility belonging to the paint dealer.

The identical color suppliers determiner 116 determines whether the selector 115 selected multiple painting contractors as suppliers of raw material paint with an identical color number. When multiple painting contractors are selected as suppliers of raw material paint with an identical color number, the identical color suppliers determiner 116 sets the identical color suppliers flag in the order paint DB 133 to "ON". Conversely, when only a single painting contractor is selected as the supplier of raw material paint with an identical color number, the identical color suppliers determiner 116 sets the identical color suppliers flag in the order paint DB 133 to "OFF".

The shipment instructor 117 refers to the raw material paint shipment instruction status in the order paint DB 133 and identifies the raw material paint identification information of the raw material paint for which the raw material paint shipment instruction status is set as "unspecified". Further, the shipment instructor 117 refers to the used paint DB 132 and identifies painting contractor identification information regarding a painting contractor in possession of a paint to which the identified raw material paint identification information is assigned. Then, the shipment instructor 117 generates shipment instruction information directed to the painting contractor corresponding to the identified painting contractor identification information. The shipment instructor 117 transmits the generated shipment instruction information, via the communicator 107, to the terminal device 3 carried by the painting contractor who is assigned with the identified painting contractor identification information.

The paint completion notifier 118 determines whether an operation (hereinafter referred to as "completion notification operation") for notifying the order-placing agent about the paint completion notification is accepted via the inputter 104. Further, when the paint completion notifier 118 determines that the completion notification operation is accepted, the paint completion notifier 118 generates a paint completion notification and transmits the paint completion notification to the terminal device 2 carried by the order-placing agent. Here, the paint completion notifier 118 first refers to the order paint DB 133 and acquires the raw material paint identification information used for manufacturing the recycled paint and the flag information indicating the details regarding the identical color suppliers flag. Next, the paint completion notifier 118 refers to the used paint DB 132 and acquires rank information and information indicating the raw material paint product number, the manufacturer name, the selling price, and the date of manufacture corresponding to the acquired raw material paint identification information. Further, the paint completion notifier 118 generates a paint completion notification containing the acquired rank information, flag information, and information indicating the raw material paint product number, the manufacturer name, the selling price, and the date of manufacture.

Upon receipt of evaluation information from the terminal device 2 carried by the order-placing agent, the evaluation information updater 119 updates the evaluation DB 134 by adding to the evaluation DB 134 the evaluation result indicated by the received evaluation information. Also, upon acceptance, via the inputter 104, of the operation performed by the user who is the paint dealer to register into the evaluation DB 134 an evaluation regarding the raw material paint procured from a painting contractor, the evaluation information updater 119 updates the evaluation DB 134. Here, the evaluation information updater 119 updates the evaluation DB 134 by adding the received evaluation result to the evaluation DB 134.

The evaluation presenter 120 transmits, via the communicator 107, evaluation DB information indicating the details registered in the evaluation DB 134 to the terminal device 3 carried by the painting contractor.

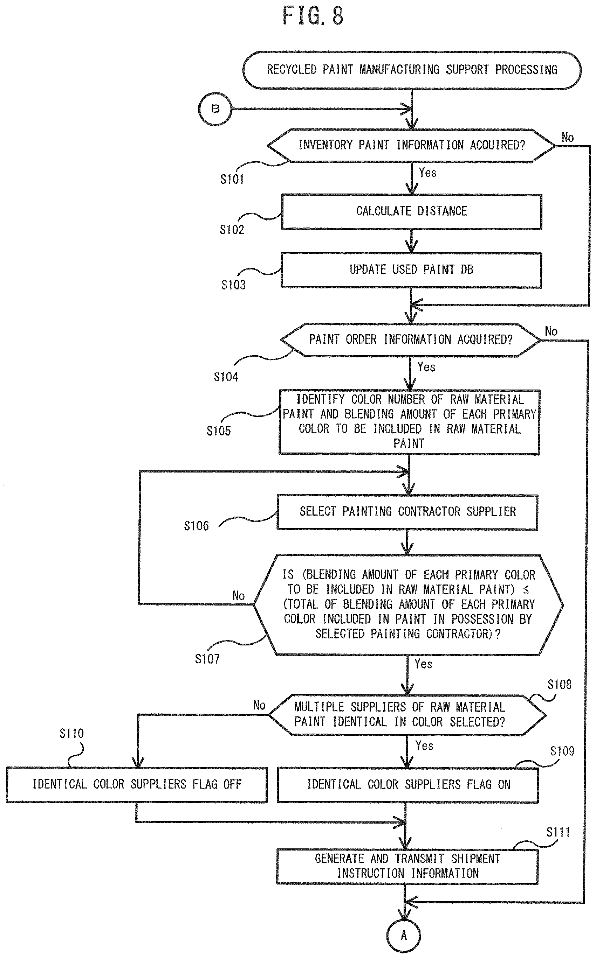

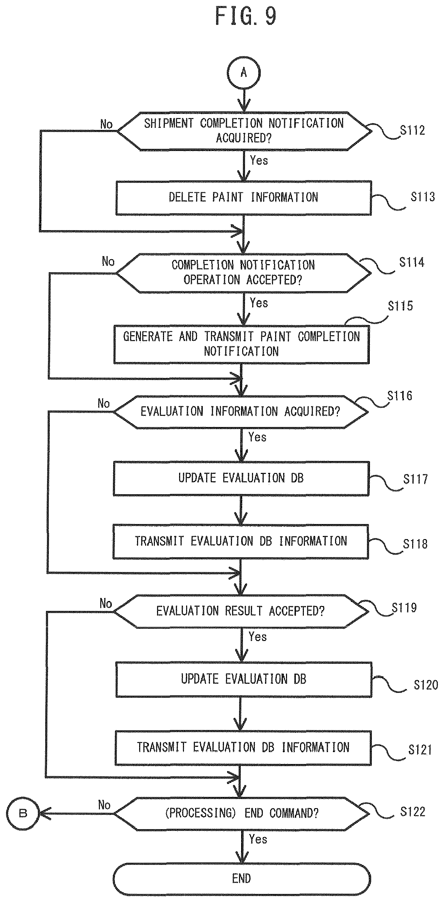

Next, recycled paint manufacturing support processing executed by the recycled paint manufacturing support device 1 according to the present embodiment is described with reference to FIGS. 8 and 9. The start of the recycled paint manufacturing support processing is triggered when the recycled paint manufacturing support device 1 is powered on by the user who is the paint dealer.

First, the acquirer 110, as illustrated in FIG. 8, determines whether inventory paint information transmitted from the terminal device 3 carried by the painting contractor is acquired (step S101). When the acquirer 110 determines that the inventory paint information is not acquired (No in step S101) processing proceeds to step S104, which is described further below.

Here, the acquirer 110 is assumed to determine that the inventory paint information is acquired (Yes in step S101). In this case, the distance calculator 111 extracts the location of the paint from the acquired inventory paint information and acquires information indicating the location of the color-mixing facility belonging to the paint dealer from the location DB 136. Further, the distance calculator 111 refers to the map information stored in the map DB 131 and calculates the distance between the location of the color-mixing facility and the location of the paint (step S102). The distance calculator 111 notifies the paint information updater 112 regarding the distance information indicating the calculated distance.

Next, the paint information updater 112 updates the used paint DB 132 by adding the painting contractor identification information, the color number information, the inventory amount information, and the like that are extracted from the inventory paint information acquired by the acquirer 110, the image file, and the rank information (step S103).

Next, the acquirer 110 determines whether the paint order information transmitted from the terminal device 2 carried by the order-placing agent is acquired (step S104). When the acquirer 110 determines that the paint order information is not acquired (No in step S104) processing proceeds to step S112, which is described further below.

Here, the acquirer 110 is assumed to determine that the paint order information is acquired (Yes in step S104). In this case, the identifier 114 identifies, based on the color number information and the order amount information of the ordered paint that is included in the paint order information, the color number of the raw material paint and the blending amount of each primary color paint to be included in the raw material paint for use in manufacturing the recycled paint (step S105).

Then, the selector 115 selects, based on the color number of the raw material paint and the blending amount of each primary color paint to be included in the raw material paint identified by the identifier 114, a painting contractor as the supplier from which raw material paint is to be procured (step S106). Here, the selector 115 preferentially selects a painting contractor that is located in a place that is nearest to the location of the color-mixing facility belonging to the paint dealer.

Next, the selector 115 determines whether the total of the blending amount of each primary color paint included in the paint in possession by the selected painting contractor is greater than or equal to the blending amount of each primary color paint to be included in the raw material paint identified by the identifier 114 (step S107). Here, the selector 115 is assumed to determine that the total of the blending amount of each primary color paint included in the paint in possession by the selected painting contractor is below the blending amount of each primary color paint to be included in the raw material paint identified by the identifier 114 (No in step S107). In this case, the selector 115 executes the processing of step S106 again. At this time, the selector 115 selects another painting contractor who, after the previously-selected painting contractor, is located in a place next-nearest to the location of the color-mixing facility belonging to the paint dealer.

Here, the selector 115 is assumed to determine that the total of the blending amount of each primary color paint included in the paint in possession by the selected painting contractor is greater than or equal to the blending amount of each primary color paint to be included in the raw material paint identified by the identifier 114 (Yes in step S107). In this case, the identical color suppliers determiner 116 determines, with respect to the painting contractor selected by the selector 115, whether multiple painting contractors are selected as suppliers of raw material paint with an identical color number (step S108). When the identical color suppliers determiner 116 determines that multiple painting contractors are selected as suppliers of raw material paint with an identical color number (Yes in step S108), the identical color suppliers flag is set to "ON" in the order paint DB 133 (step S109).

Conversely, when the identical color suppliers determiner 116 determines that only a single painting contractor is selected as the supplier of raw material paint with an identical color number (No in step S108), the identical color suppliers flag is set to "OFF" in the order paint DB 133 (step S110).

Next, the shipment instructor 117 generates shipment instruction information and transmits the shipment instruction information to the terminal device 3 that is carried by the painting contractor (step S111). Here, the shipment instructor 117 generates shipment instruction information directed to the painting contractor selected by the selector 115. The shipment instruction information contains product number information of paint that uses raw material paint and the product number information of the raw material paint. The shipment instructor 117 transmits the generated shipment instruction information, via the communicator 107, to the terminal device 3 carried by the identified painting contractor.

Here, when the terminal device 3 carried by the painting contractor receives the shipment instruction information from the recycled paint manufacturing support device 1, the terminal device 3 notifies the painting contractor who has the terminal device 3 that a shipment instruction for inventory paint has been received. Further, after the after the painting contractor ships its inventory paint to the paint dealer in response to the notification of the shipment instruction, the painting contractor assumedly performs an operation for notifying the paint dealer that the shipment of the paint to the paint dealer is complete. In this case, the terminal device 3 generates a shipment completion notification and transmits the shipment completion notification to the recycled paint manufacturing support device 1. The shipment completion notification contains product number information of the shipped raw material paint and painting contractor identification information for identifying the painting contractor who is the shipment source.

After execution of processing in step S111, the acquirer 110 determines whether the shipment completion notification that is transmitted by the terminal device 3 carried by the painting contractor is acquired, as illustrated in FIG. 9 (step S112). When the acquirer 110 determines that the shipment completion notification is not acquired (No in step S112), the processing of step S114 is performed, which is described further below. Conversely, when the acquirer 110 determines that the shipment completion notification is acquired (Yes in step S112), the paint information updater 112 deletes from the used paint DB 132 paint information corresponding to a combination of the raw material paint product number information of the raw material paint and the painting contractor identification information of the painting contractor that is the shipment source that are included in the shipment completion notification acquired by the acquirer 110 (step S113).

Next, the paint completion notifier 118 determines whether a completion notification operation is accepted via the inputter 104 (step S114). When the paint completion notifier 118 determines that the completion notification operation is not acquired (No in step S114), processing proceeds to step S116, which is described further below. Conversely, when the paint completion notifier 118 determines that the completion notification operation is accepted (Yes in step S114), the paint completion notifier 118 generates a paint completion notification and transmits the paint completion notification to the terminal device 2 carried by the order-placing agent (step S115). The paint completion notification, as previously described, contains product number information of raw material paint used for manufacturing the recycled paint, information indicating the manufacturer name, the selling price, and the date of manufacture, rank information, and comparison image information.

Next, the acquirer 110 determines whether evaluation information is acquired from the terminal device 2 carried by the order-placing agent (step S116). When the acquirer 110 determines that the evaluation information is not acquired (No in step S116), processing proceeds to step S119, which is described further below. Conversely, when the acquirer 110 determines that the evaluation information is acquired (Yes in step S116), the evaluation information updater 119 updates the evaluation DB 134 by adding to the evaluation DB 134 the evaluation result indicated in the evaluation information acquired by the acquirer 110 (step S117).

Afterwards, the evaluation presenter 120 transmits the evaluation DB information indicating the details registered in the evaluation DB 134, via the communicator 107, to the terminal devices 3 of all the painting contractors (step S118). Doing so enables each of the painting contractors in possession of paint to confirm the evaluation result for their own paint.

Next, the evaluation information updater 119 determines whether the evaluation result regarding raw material paint procured from a painting contractor is accepted via inputter 104 (step S119). Here, the evaluation information updater 119 accepts an evaluation result from the inputter 104 when the user who is the paint dealer performs an operation for registration into the evaluation DB 134 via the inputter 104. When the evaluation information updater 119 determines that the evaluation information is not accepted (No in step S119), processing proceeds to step S122, which is described further below.

Conversely, when the evaluation information updater 119 determines that the evaluation result is accepted (Yes in step S119), the evaluation DB 134 is updated by adding the accepted evaluation result to the evaluation DB 134 (step S120).

Next, the evaluation presenter 120 transmits, via the communicator 107, the evaluation DB information indicating the details registered in the evaluation DB 134 to the terminal device 3 carried by the painting contractor (step S121).

Afterwards, the acquirer 110 determines whether there is an end command by the user, via the inputter 104, causing the recycled paint manufacturing support processing to end (step S122). Upon determination of the end instruction by the acquirer 110 (Yes in step S122), the recycled paint manufacturing support processing ends. Conversely, when the acquirer 110 determines that an end instruction is not received (No in step S122), processing in step S101 is executed again.

As described above, according to the recycled paint manufacturing support device 1 in this embodiment, the identifier 114 identifies the color number of the raw material paint having a color number corresponding to a color that is lighter than the color number of the recycled paint and the blending amount of each primary color paint to be included in the raw material paint. Then, the selector 115 refers to the used paint DB 132 and selects, based on the color number of the raw material paint and the blending amount of each primary color paint to be included in the raw material paint that are identified by the identifier 114, the painting contractor to be the supplier from which the raw material paint is to be procured. In doing so, the mixing of primary color paint into raw material paint having a color number corresponding to a color that is lighter than the color number of the desired recycled paint enables procurement of paint suited to the manufacturing method for manufacturing the desired recycled paint. Also, the time and effort spent looking for a painting contractor to be a supplier of raw material paint for the ordered recycled paint. Therefore, raw material paint optimal for the method of manufacturing the ordered recycled paint is readily obtainable, and thus the delivery time of the recycled paint can be expedited.

Also, the identifier 114 in this embodiment identifies color number of the raw material paint that is lighter in color than the ordered recycled paint and the blending amount of each primary color paint to be included in the raw material paint. This enables procurement of raw material paint suitable for a typical method for manufacturing recycled paint, that is, mixing, into raw material paint lighter in color than the ordered recycled paint, of paint that is darker in color than the raw material paint to produce recycled paint.

Further, the selector 115 in the present embodiment refers to the distance information stored in the used paint DB 132 and selects, from the painting contractor identification information of the painting contractor in possession of the raw material paint that is usable as raw material of the ordered recycled paint, the painting contractor identification information of the painting contractor in possession of paint that is nearest to the location of the color-mixing facility belonging to the paint dealer. In doing so, a painting contractor holding in storage paint that is near the color-mixing facility is preferentially selected as the supplier of the raw material paint for the recycled paint that is ordered. Therefore, the raw material paint transportation distance from the paint storage location of the painting contractor to the color-mixing facility can be shortened, thereby enabling the time required to transport the raw material paint to be shortened, and thus the delivery of the recycled paint can be expedited.

Also, the distance calculator 111 in this embodiment refers to the map information and calculates the distance between the location of the color-mixing facility and the location of the paint indicated in the paint location information included in the inventory paint information acquired by the acquirer 110. Further, the paint information updater 112 uses the distance information indicating the distance calculated by the distance calculator 111 and updates the distance information stored in the used paint DB 132. In doing so, when, for example, the storage location of the paint is changed, the painting contractor can change the distance information in the used paint DB 132 simply by changing the paint location information included in the inventory paint information to be transmitted to the recycled paint manufacturing support device 1. Thus, this is advantageous to the paint dealer because of the saved time and effort that is otherwise spent in the task of updating the used paint DB 132 to change the paint storage location of the painting contractor.

### (Modified Examples)

An embodiment of the present disclosure is described above. However, the present disclosure is not confined to the above embodiment. For example, the configuration of the recycled paint manufacturing support device may include a colorimetry information acquirer that acquires, from a colorimeter that measures the blending percentage of each primary color paint included in paint, colorimetry information indicating the blending percentage of each primary color paint included in the paint measured by the colorimeter, and a color characteristic value and amount identifier that identifies the color characteristic value and amount of the ordered paint based on the colorimetry information acquired by the colorimetry information acquirer. In this case, the identifier can identify the color characteristic value and the amount of the ordered recycled paint based on the colorimetry information acquired by the colorimetry information acquirer. The colorimeter may be a smartphone that has, for example, colorimeter functionality.

According to the present configuration, even when, for example, the color number of the recycled paint that is to be ordered by the order-placing agent is not known, the identifier can identify the color characteristic value and the amount of the paint ordered based on the colorimetry information acquired from the colorimeter that is used by the order-placing agent. Therefore, this is advantageous in that a supplier of raw material paint for use in manufacturing the recycled paint can be suitably selected even when the recycled paint to be ordered by the order-placing agent is not known.

In the embodiment, an example is described in which the recycled paint manufacturing support device 1 selects a painting contractor as the supplier of paint to be used as the raw material of the ordered recycled paint, however the paint holder to be selected is not limited to only painting contractors. For example, another paint dealer or paint manufacturer may be selected instead. In this case, the used paint DB 132 may associatively store color characteristic value information and/or inventory amount information of the paint in possession by the other paint dealer or the paint manufacturer with identification information for identifying the other paint dealer or the paint manufacturer.

In the embodiment, an example is described in which the identifier 114 identifies paint having a color number that corresponds to a color lighter than a color corresponding to the color number of the ordered recycled paint. However, the raw material paint identified by the identifier 114 is not limited to this example. Instead, for example, paint having a color number that corresponds to a color darker than the color corresponding to the color number of the ordered recycled paint may be identified by the identifier as raw material paint. As another option, the identifier may identify a paint having at least one of brightness and saturation that is higher than that of the ordered recycled paint.

In the embodiment, the selector 115 selects a supplier of raw material paint based on the color number (color characteristic value) and the blending amount of the recycled paint identified by the identifier 114. That is to say, an example is described in which the selector 115 selects a supplier of raw material paint using, as a reference, only the color number and the inventory amount of the paint in possession by each painting contractor. However, this example is meant to be illustrative and not limiting. For example, the selector 115 may select a supplier of raw material paint using, as the reference, not only the color number and the inventory amount of the paint in possession by each painting contractor but also the date of manufacture of the paint. In this case, when only the color number and the inventory amount of paint are used as the reference, the selector 115 excludes, as a potential supplier, any painting contractors in possession of paint with a date of manufacture that is not within a predetermined time period, even though the paint matches with the color number of the recycled paint and the blending amount of each primary color paint to be included in the recycled paint identified by the identifier 114. Such a configuration is advantageous in that, for example, inadvertent procurement of paint with a very old date of manufacture can be prevented, and higher quality recycled paint can be provided. Also, in the embodiment, there may be a business condition storage that stores information regarding business hours and business time periods of the painting contractors, and the selector 115 may select a supplier of raw material paint in accordance with the business information of the painting contractors stored in the business condition storage.

In the embodiment, an example is described in which the selector 115 preferentially selects a painting contractor that is located in a place that is near the location of the color-mixing facility belonging to the paint dealer, but this example is meant to be illustrative and not limiting. For example, the selector 115 may be configured to preferentially select a painting contractor in possession of paint containing the blending amount of each primary color paint that is greater than or equal to the blending amount of each primary color paint included in the raw material paint identified by the identifier 114.

In the embodiment, an example is described in which the painting contractor inputs information regarding paint in possession by the painting contractor, via the terminal device 3, such that the inventory paint information indicating information regarding paint in possession by the painting contractor is transmitted from the terminal 3 to the recycled paint manufacturing support device 1. However, this example is meant to be illustrative and not limiting. For example, the terminal device 3 may be configured to, upon the taking of a photo by the painting contractor, using a camera function on the terminal device 3, of a label affixed to the can that is holding the paint in possession by the painting contractor, transmit to the recycled paint manufacturing support device 1 captured image information (inventory paint image information) obtained from the photo taken. In this case, the recycled paint manufacturing support device 1 may be configured to include an image analyzer that analyzes the captured image information of the label received from the terminal device 3 to extract, from the captured image information, information (inventory paint information) regarding the paint in possession by a painting contractor.

Here, the painting contractor uses the terminal device 3 to take a photo of the label affixed to the can holding the paint in possession by the painting contractor and inputs into the terminal device 3 location information indicating the location of the paint storage place. Then the terminal device 3 transmits the captured image information of the label (inventory paint image information) and the location information to the recycled paint manufacturing support device 1. Also, when the recycled paint manufacturing support device 1 receives the inventory paint image information and the location information, the image analyzer of the recycled paint manufacturing support device 1 analyzes the inventory paint image information to extract the inventory paint information corresponding to the inventory paint image information.

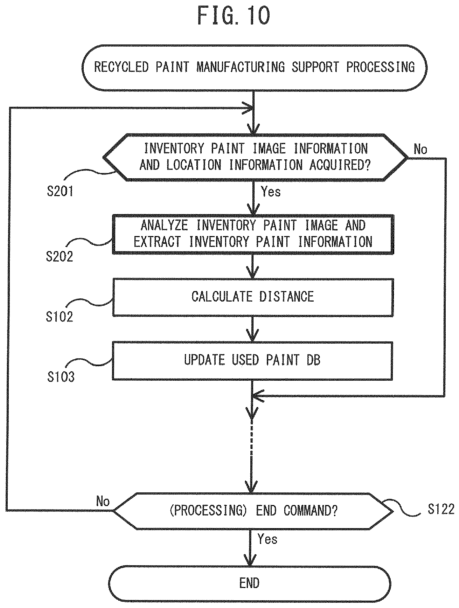

Here, the recycled paint manufacturing support processing that is executed by the recycled paint manufacturing support device 1 according to the these modified examples is described with reference to FIG. 10. In FIG. 10, the processing that is the same as the recycled paint manufacturing support processing according to the embodiment is given the same reference numerals as that of FIGS. 8 and 9. Also, the recycled paint manufacturing support device 1 according to the modified examples, includes a functional configuration in which an image analyzer is added in the recycled paint manufacturing support device 1 according to the embodiment. In the recycled paint manufacturing support device 1 in the modified examples, the same components as in the recycled paint manufacturing support device 1 according to the embodiment are described using the same reference numerals as in FIG. 4. First, the acquirer 110 determines whether inventory paint image information and location information transmitted from the terminal device 3 carried by the painting contractor is acquired from the terminal device 3 (step S201). When the acquirer 110 determines that the inventory paint image information and the location information are not acquired (No in step S201), processing proceeds to previously-described step S104 in FIG. 8.

Here, the acquirer 110 is assumed to determine that the inventory paint image information and the location information are acquired (Yes in step S201). In this case, the image analyzer analyzes the inventory paint image information and extracts the inventory paint information corresponding to the inventory paint image information (step S202). Afterwards, the processing after step S102 as described in the aforementioned embodiment is executed.

In the example described above, the label affixed to the paint in possession by the painting contractor is the subject to be photographed by the painting contractor using the terminal devices 3. However, the subject to be photographed is not limited to the label. For example, the terminal device 3 may be configured to, upon taking a photo of a QR code (registered trademark) or a barcode affixed to a can holding paint, indicating information regarding the paint, transmit the captured image of the QR code or the barcode to the recycled paint manufacturing support device 1. In this case, the image analyzer analyzes the image of the QR code or the barcode to extract the inventory paint information of the paint.

As another option, the terminal device 3 may be configured to, upon taking a photo of the entire can including the label affixed to the can holding the paint, transmit the captured image of the entire can to the recycled paint manufacturing support device 1. In this case, the recycled paint manufacturing support device 1 may be configured to include a design DB for associating the design of the entire can holding the paint with the information regarding the paint. Then the image analyzer executes matching processing on the image information registered in the design DB and the captured image of the entire can to extract information regarding paint from the captured image of the entire can.

According to this configuration, the painting contractor is saved from having to input into the terminal device 3 information regarding paint in possession by the painting contractor.

In the embodiment, the recycled paint manufacturing support device 1 may be configured to transmit to the terminal device 2 analogous paint information indicating the paint name of recycled paint that has a color number and product type analogous with the ordered recycled paint and can be delivered within a designated delivery time. Here, the recycled paint manufacturing support device 1, for example when the paint order information is received from the terminal device 2, first determines whether the recycled paint of the color number included in the paint order information can be delivered within the designated delivery time. Then, when the recycled paint manufacturing support device 1 determines that the recycled paint of the color number and the product type included in the paint order information cannot be delivered within the designated delivery time, the recycled paint manufacturing support device 1 transmits the analogous paint information to the terminal device 2. Then, the terminal device 2 displays on the display a display screen indicating "... can be delivered as paint analogous to the recycled paint with a color number and product type that is identical to the ordered color" based on the analogous paint information received from the recycled paint manufacturing support device 1.

This configuration enables paint dealer to adequately handle a situation in which the order-placing agent is not so particular about the color of paint or is prioritizing the delivery date.

In the embodiment, an example is described in which the processing is executed sequentially in order of steps S101 to S122. However, this is intended to be illustrated and not limiting. For example, the sequence of processing of steps S101 to step S103, the sequence of processing of steps S104 to S111, the sequence of processing of steps S112 and S113, the sequence of processing of steps S114 and S115, the sequence of processing of steps S116 to S118, and the sequence of processing of steps S119 to S121 may be executed in a parallel manner.

In the embodiment, an example is described in which a color number having a hexadecimal color code is used as the color characteristic value, however, this is intended to be illustrative and not limiting. For example, a color characteristic value of another color system such as the CIE-XYZ color system, the CIE-L*a*b* color system, the CIE-L*C*H* color system, or the Munsell color system may be used as the color characteristic value.

Also, the various functions of the recycled paint manufacturing support device 1 according to the present disclosure can be realized by using a generally-used computer system, not a dedicated system. For example, the recycled paint manufacturing support device 1 executing the above-described processing may be configured on a computer connected to a network by saving and distributing programs for executing the above-described operations on a non-transitory recording medium readable by a computer system (CD-ROM, magnetic disk, and the like) and installing the program in the computer system.

Moreover, any method may be used to provide programs to the computer. For example, the programs uploaded to a bulletin board system (BBS) on a communication line and distributed to the computer via the communication line. Then the computer activates and executes the programs under the control of an OS in a similar manner to other applications. As a result, the computer functions as the recycled paint manufacturing support device 1 executing the processing described above.

Embodiments and variations according to the present disclosure are been described above, but the present disclosure is not limited to these embodiments and variations. The present disclosure includes any appropriate combination of the embodiments and variations, as well as including any appropriate modification thereto.

The present disclosure is preferable, in operation of a trading market to effectively utilize leftover paint generated by, for example, painting contractors.
- 1: Recycled paint manufacturing support device
- 2, 3: Terminal device
- 101: CPU
- 103: Auxiliary storage
- 104: Inputter
- 107: Communicator
- 110: Acquirer
- 111: Distance calculator
- 112: Paint information updater
- 113: Order source extractor
- 114: Identifier
- 115: Selector
- 116: Identical color suppliers determiner
- 117: Shipment instructor
- 118: Paint completion notifier
- 119: Evaluation information updater
- 120: Evaluation presenter
- 131: Map DB
- 132: Used paint DB
- 133: Order Paint DB
- 134: Evaluation DB
- 135: Blending Percentage DB
- 136: Location DB
- B1, B2: Input Field
- B3: Checkbox
- EK: Complete button
- GA1: Paint information input screen
- NT: Network

## Claims

1. A recycled paint manufacturing support device (1) **characterized by** comprising:
a paint storage (132) that stores paint information containing inventory holder identification information for identifying a paint holder among paint holders, color characteristic value information indicating a color characteristic value of paint in possession by the paint holder, and inventory amount information indicating an inventory amount of the paint;
an identifier (114) that identifies, based on a color characteristic value and an amount of ordered recycled paint, (i) a color characteristic value of raw material paint that is usable as a raw material of the ordered recycled paint, the color characteristic value of the raw material paint being different than the color characteristic value of the recycled paint and (ii) a blending amount of each primary color included in the raw material paint; and
a selector (115) that refers to the paint storage (132) and selects, based on the color characteristic value of the raw material paint and the blending amount of each primary color to be included in the raw material paint that are identified by the identifier (114), a supplier paint holder, from among the paint holders, as a supplier from which the raw material paint is to be procured.

2. The recycled paint manufacturing support device (1) according to claim 1, **characterized in that** the identifier (114) identifies the color characteristic value of the raw material paint that is lighter in color than the recycled paint and a blending amount of each primary color to be included in the raw material paint.

3. The recycled paint manufacturing support device (1) according to claim 1 or 2, **characterized in that**
the paint information further contains distance information indicating a distance between a location of a paint manufacturing facility and a location of the paint in possession by the paint holder, and
the selector (115) refers to the distance information and preferentially selects, from inventory holder identification information of any paint holders in possession of raw material paint usable as the raw material of the recycled paint, a paint holder of paint located in a place that is nearest of the paint manufacturing facility.

4. The recycled paint manufacturing support device (1) according to claim 3, further **characterized by** comprising:
a location storage (136) that stores facility location information indicating a location of a paint manufacturing facility;
a map information storage (131) that stores map information;
an acquirer (110) that acquires from the paint holder inventory paint information containing paint location information indicating a location of paint in possession by the paint holder;
a distance calculator (111) that refers to the map information to calculate a distance between the location of the paint manufacturing facility and the location of the paint indicated in the paint location information included in the inventory paint information; and
a paint information updater (112) that updates the paint information stored in the paint storage (132) by adding the paint information containing distance information indicating the distance calculated by the distance calculator (111).

5. The recycled paint manufacturing support device (1) according to any one of claims 1 to 4, further **characterized by** comprising:
a colorimetry information acquirer that acquires, from a colorimeter that measures a blending percentage of each primary color paint included in paint, colorimetry information indicating a blending percentage of each primary color paint to be included in paint; and
a color characteristic value and amount identifier that identifies, based on the colorimetry information acquired by the colorimetry information acquirer, a color characteristic value and amount of the ordered recycled paint.

6. A recycled paint manufacturing support method that is executed by a recycled paint manufacturing support device, the recycled paint manufacturing support method **characterized by** comprising:
a step of identifying, based on a color characteristic value and an amount of ordered recycled paint, (i) a color characteristic value of raw material paint that is usable as a raw material of the ordered recycled paint, the color characteristic value of the raw material paint being different than the color characteristic value of the recycled paint and (ii) a blending amount of each primary color included in the raw material paint; and
a step of referring to paint information that is stored in a paint storage (132) and contains inventory holder identification information for identifying a paint holder, color characteristic value information indicating a color characteristic value of paint in possession by the paint holder, and inventory amount information indicating an inventory amount of the paint, and selecting based on the color characteristic value of the raw material paint and the blending amount of each primary color to be included in the raw material paint that are identified by an identifier (114), a supplier paint holder, from among the paint holders, as a supplier from which the raw material paint is to be procured.

7. A program for causing a computer to function as:
an identifier (114) that identifies, based on a color characteristic value and an amount of ordered recycled paint, (i) a color characteristic value of raw material paint that is usable as a raw material of the ordered recycled paint, the color characteristic value of the raw material paint being different than the color characteristic value of the recycled paint and (ii) a blending amount of each primary color included in the raw material paint; and
a selector (115) that refers to paint information that is stored in a paint storage (132) and contains inventory holder identification information for identifying a paint holder, color characteristic value information indicating a color characteristic value of paint in possession by the paint holder, and inventory amount information indicating an inventory amount of the paint, and selects, based on the color characteristic value of the raw material paint and the blending amount of each primary color to be included in the raw material paint that are identified by the identifier (114), a supplier paint holder, from among the paint holders, as a supplier from which the raw material paint is to be procured.
